# DEMANDE DE BREVET EUROPEEN

(11) **EP 0 624 871 A2**
(43) Date de publication de la demande: **17.11.1994**
(21) Numéro de dépôt: 94401038.8
(22) Date de dépôt: 10.05.1994
(51) Int. Cl.: G11B 11/10

(54) **Tête magnétique d'écriture pour enregistrement magnéto-optique**

(30) Priorité: 14.05.1993 FR 9305832
(71) Demandeur: COMMISSARIAT A L'ENERGIE ATOMIQUE, F-75015 Paris (FR)
(72) Inventeur: Albertini, Jean-Baptiste, F-38100 Grenoble (FR); Fedeli, Jean-Marc, F-38140 Beaucroissant (FR)
(74) Mandataire: Signore, Robert

(57) **Abrégé**

La tête comprend un substrat en silicium (21) dans lequel est enterré un bobinage conducteur (22). Le bobinage (22) est en retrait par rapport au plan de vol (28) de la tête. Un circuit magnétique (24) peut compléter la tête.

Application à l'enregistrement magnéto-optique.

## Description

### Domaine technique

La présente invention a pour objet une tête magnétique d'écriture ou de réécriture pour enregistrement magnéto-optique.

L'enregistrement magnéto-optique devrait connaître un accroissement considérable dans les années à venir. Situé entre l'enregistrement magnétique et les mémoires optiques, le procédé magnéto-optique permet d'écrire et de relire à volonté des informations binaires sur un support. Cette technique, grâce aux fortes densités d'informations stockées sur disque amovible, permet déjà de concurrencer les disques durs d'ordinateurs, mais surtout les disquettes (de type souple ou "floppy").

Si les performances d'un dispositif magnéto-optique en temps d'accès restent encore inférieures à celles d'un disque dur magnétique (20 ms contre 8 ms environ pour un disque dur), les avantages sont l'amovibilité du disque, la stabilité du stockage de l'information (15 ans minimum, voire 40 ans suivant le type de support magnéto-optique, contre 2 à 3 ans pour une disquette magnétique) et la grande densité d'information (standard ISO de 128 Mo pour les disques de 88 mm de diamètre, soit une densité d'environ 16 kTPI et 13 kBPI, nouveau standard en cours de définition, de près du double de capacité par rapport au standard ISO, plus de 100 Mo pour le "Mini-Disc" de 64 mm de la Société SONY).

Les domaines d'application de l'invention sont les mémoires de masse des ordinateurs (micro-informatique, stations de travail et gros systèmes), le stockage de données informatiques sur disquette amovible (logiciels, bases de données, archivage d'informations) et les applications audio/vidéo grand public (Mini-Disc SONY ou futurs disques vidéo ré-enregistrables).

### Etat de la technique antérieure

La technique de l'enregistrement magnéto-optique est dérivée de celle des lecteurs de disques optiques dits "compacts". Comme pour ces derniers, elle nécessite une diode laser, une tête optique, un système d'entraînement du disque et une électronique qui est principalement logique. Par contre, la tête optique est plus complexe à réaliser, car la lecture de l'information (uniquement optique) fait appel à la détection de la rotation du plan de polarisation de la lumière réfléchie (effet KERR), ou transmise (effet FARADAY).

La plupart des enregistreurs magnéto-optiques actuels fonctionnent en deux temps pour l'écriture : une phase d'effacement, pendant laquelle un champ magnétique de sens donné est appliqué, suivie d'une phase d'écriture pendant laquelle le champ magnétique est inversé. La phase d'effacement est nécessaire lorsque l'on ne peut inverser suffisamment rapidement le sens du champ magnétique. Le procédé de réécriture directe ("direct overwrite" en anglais) est amené à se généraliser dans un proche avenir, car il évite la phase d'effacement préalable et minimise ainsi le temps d'écriture (durée totale d'enregistrement divisée par deux).

Deux procédés existent pour la réécriture directe : la modulation de la puissance laser ("Laser Beam Modulation " ou LBM en anglais) et la modulation du champ magnétique ("Magnetic Field Modulation" ou MFM en anglais). Le premier procédé nécessite des disques spécifiques (comportant plusieurs couches magnétiques) ainsi qu'une variation de la puissance laser entre deux niveaux, mais évite d'avoir à faire varier le champ magnétique. Le deuxième procédé, auquel se rapporte la présente invention, permet d'écrire sur tout disque magnéto-optique en modifiant le champ magnétique très rapidement (en moins d'une fraction de microseconde, ce qui correspond à des fréquences de plusieurs Mégahertz).

Pour être efficace, la tête assurant la variation (ou la modulation) du champ magnétique doit satisfaire à plusieurs contraintes :
- création d'un champ magnétique suffisant (de l'ordre de 20 mT) dans la couche magnéto-optique du disque au point de focalisation du laser,
- inductance limitée (de l'ordre du µH) pour permettre une variation suffisamment rapide (créneaux d'une fraction de microseconde de durée, voire d'une fraction de dixième de microseconde, ce qui équivaut à des fréquences de quelques MHz à 50 MHz),
- compatibilité avec un disque amovible, pouvant donc comporter des poussières,
- faible masse pour assurer un temps d'accès le plus faible possible,
- bonne dissipation de la chaleur.

Les têtes magnétiques utilisées actuellement dans les enregistreurs magnéto-optiques pour la modulation du champ magnétique (notamment pour le Mini-Disc de SONY) sont de taille assez importante (plusieurs mm). Ces têtes présentent, par conséquent, l'inconvénient d'avoir une inductance élevée et sont ainsi limitées en fréquence de modulation, donc en débit d'écriture. Leur grande taille s'accompagne également d'une masse importante entraînant un temps d'accès peu performant.

Le document EP-A-0 492 888 décrit, par ailleurs, une tête magnétique en couches minces, qui comprend un substrat en matériau magnétique dans lequel un retrait a été pratiqué pour recevoir un bobinage conducteur. Ce bobinage affleure au niveau des bords latéraux et du pôle central du substrat magnétique.

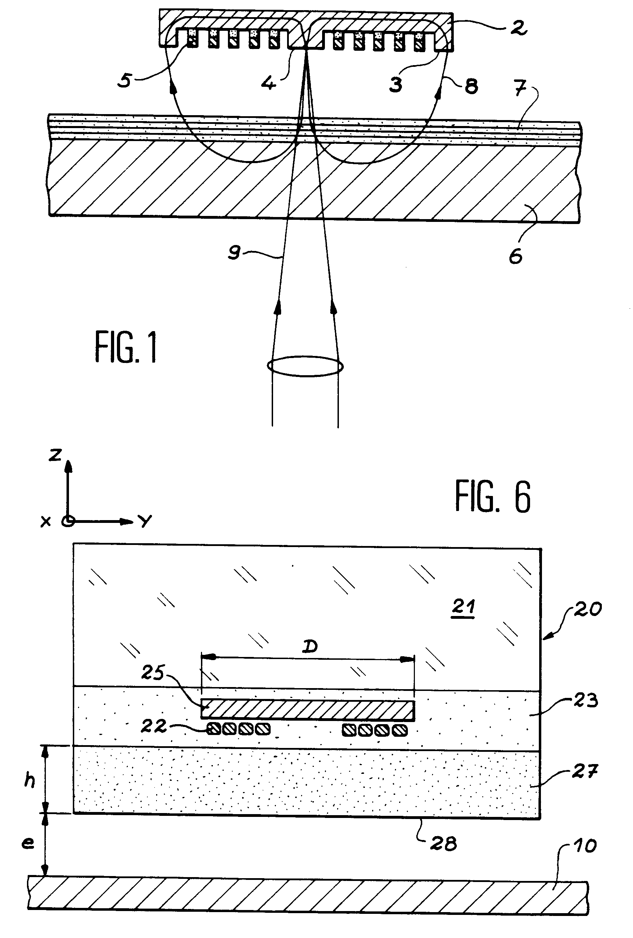

La figure 1 annexée montre une tête magnétique selon cet art antérieur. Le substrat magnétique porte la référence 2. Il présente un retrait entre un bord extérieur 3 et un pôle central 4. Le bobinage 5 entoure le pôle central 4. L'ensemble est disposé devant un support 6 revêtu d'une couche d'enregistrement 7. Les lignes de champ magnétique portent la référence 8. Elles coupent la couche d'enregistrement 7 sur une zone assez large mais c'est essentiellement la zone face au pôle 4 qui travaille en écriture, le champ devenant vite très faible lorsqu'on s'en éloigne.

Par ailleurs, la zone d'écriture ou de réécriture est définie plus précisément par un faisceau laser 9 qui vient frapper une partie très étroite de la couche 7, là où l'on souhaite écrire un élément d'information.

Ce type de tête présente encore des inconvénients. La dissipation de la chaleur dégagée par le bobinage y est mal assurée. En cas d'accident de vol, où la tête viendrait s'écraser sur la couche 7, l'enroulement 5 pourrait être sérieusement endommagé. Par ailleurs, le poids d'une telle tête est important en raison de la nature du substrat (qui est un ferrite tel que le ferrite de nickel-zinc), ce qui réduit le temps d'accès. Enfin, le procédé de fabrication d'une telle tête avec son usinage du substrat s'accommode mal d'une production de masse, de sorte que le prix de revient de la tête reste élevé.

La présente invention a justement pour but de remédier à ces inconvénients.

### Exposé de l'invention

Selon l'invention, la tête magnétique est réalisée sur un substrat de silicium, ce qui d'une part, permet d'utiliser la technologie de la microélectronique et notamment une production collective et, d'autre part, conduit à une bonne dissipation de la chaleur dégagée par le bobinage. Ce bobinage est constituée d'un ou plusieurs niveaux de conducteurs enroulés en spirale d'au moins une dizaine de tours, chaque spirale étant située dans un plan parallèle au substrat. Une bobine ainsi constituée, avec un rayon intérieur de l'ordre de 20 à 100 µm et un rayon extérieur de l'ordre de 100 µm à 1 mm, permet de créer sur son axe un champ magnétique avec une composante perpendiculaire importante.

Un circuit magnétique peut aider à amplifier ce champ d'écriture. Ce circuit magnétique peut être limité à une couche magnétique mince d'épaisseur uniforme (de l'ordre de 4 µm d'épaisseur) très facile à réaliser en technologie microélectronique. Dans le document EP-0 492 888 déjà cité, le pôle magnétique aide également à augmenter le champ au centre de la tête, mais les résultats de simulation effectués par le Demandeur, montrent que l'influence de ce pôle à grande distance devient négligeable, et qu'il est préférable de se limiter à une feuille magnétique (par exemple de FeNi ou de Sendust) d'épaisseur constante. On obtient ainsi un procédé de fabrication plus simple avec des performances presqu'aussi bonnes pour une tête volant à grande distance du disque (de l'ordre de 5 µm).

La tête de l'invention étant prévue pour fonctionner avec des temps très courts, donc à haute fréquence (jusqu'à plusieurs dizaines de MHz), des courants induits peuvent apparaître dans le circuit magnétique. Ces courants pouvant affecter le champ magnétique utile créé par la tête. On pourra les éliminer en introduisant des fentes ou des rainures, notamment radiales, dans le plan du disque. Ces rainures traversent complètement le circuit magnétique et divisent celui-ci en secteurs électriquement isolés sans gêner le passage du champ magnétique.

Les connexions électriques peuvent être réalisées à travers le substrat de silicium (intraconnexions). Pour un conducteur en simple spirale, une ou deux intraconnexions sont suffisantes. Le courant arrive par une intraconnexion reliée à un plot conducteur connecté à la spire externe et ressort soit par une deuxième intraconnexion traversant le substrat et reliée à un autre plot situé à l'intérieur de la spirale, soit par le substrat de silicium relié par une connexion à un plot connecté à l'extrémité interne de la spirale conductrice.

Les têtes de l'invention peuvent être réalisées collectivement dans un substrat de silicium. L'ensemble ainsi constitué est découpé en patins, aptes à voler sur le disque en rotation, comme des têtes classiques sur un disque dur magnétique. Avant découpage, chaque patin peut être profilé avec des rails, des décrochements, etc...

Le bobinage créant le champ magnétique est en retrait par rapport à la surface portante du patin de vol (ou plan de vol), de manière à le protéger d'un accident de vol (écrasement du patin sur le disque).

Ce bobinage peut être réalisé dans un retrait entre deux surfaces portantes ou bien enfoui sous une couche protectrice non magnétique déposée sur le substrat avant découpe.

La distance entre le plan de vol le plus proche du disque et le plan de la bobine peut être de l'ordre d'une dizaine de micromètres.

Un patin de l'ordre de 4x3x0,5 mm ou 3x2x0,5 mm monté sur un ressort approprié (force de 1 à quelques gf)pourra voler à plusieurs micromètres au-dessus du disque.

Grâce au substrat de silicium, la tête de l'invention peut être réalisée avec les équipements courants de micro-électronique, ce qui autorise une production de masse à bas coût. De plus, la petite taille que permet de réaliser cette technologie, confère à ces têtes une faible masse, caractéristique intéressante pour avoir un temps d'accès réduit, et une faible inductance, ce qui permet de faire varier le champ avec une très haute fréquence pour obtenir de très hautes densités d'information.

Le silicium a, de plus, de bonnes propriétés de conduction thermique, ce qui assure un refroidissement correct de la tête en fonctionnement.

La structure horizontale de la tête, avec le plan du bobinage parallèle au plan du disque, est optimale pour créer un champ perpendiculaire dans la couche active de ce dernier.

Contrairement aux têtes d'enregistrement pour disques durs magnétiques, qui doivent voler le plus près possible du disque, la tête magnétique de l'invention crée un champ à grande distance et largement épanoui, ce qui permet d'enfouir cette tête sous une couche de protection de quelques microns à une dizaine de microns d'épaisseur ou de la positionner en retrait par rapport au plan de vol de la tête. Ceci présente deux avantages importants : d'une part, la tête est bien protégée en cas d'atterrissage brutal du patin sur le disque (dû à une coupure de courant ou à un choc, par exemple) ; d'autre part, même si le patin atterrit sur un disque dépourvu de couche protectrice, le champ magnétique créé sur le disque sera bien moins important que si la surface de la tête avait été en contact avec ce dernier ; il n'y a donc aucun risque d'effacer l'information inscrite (en dépassant le champ coercitif du matériau magnéto-optique) ailleurs qu'à l'endroit chauffé par le laser.

Un autre avantage lié au champ largement épanoui est qu'il est possible de faire voler le patin à une grande hauteur au-dessus du disque (de quelques micromètres à une dizaine de micromètres, ce qui enlève aux poussières éventuellement présentes sur la surface du disque tout caractère dangereux.

Le circuit magnétique, s'il n'est pas absolument indispensable, permet cependant d'améliorer le rendement de la tête en diminuant le courant nécessaire pour créer un champ donné sur le disque.

### Brève description des dessins

- la figure 1, déjà décrite, montre une tête magnétique selon l'art antérieur,
- la figure 2 montre, en coupe, une tête magnétique selon l'invention, avec un circuit magnétique possédant un pôle central ;
- la figure 3 montre la même tête, en vue de dessous ;
- la figure 4 illustre, en coupe, une variante de type catamaran ;
- la figure 5 montre la même variante en vue de dessous ;
- la figure 6 illustre une autre variante avec circuit magnétique simplifié ;
- la figure 7 montre, en vue de dessus, un circuit magnétique rainuré avec trou de passage pour intraconnexion ;
- les figures 8A et 8B illustrent, en coupe, deux modes de réalisation des intraconnexions ;
- les figures 9A et 9B illustrent différentes étapes d'un procédé de réalisation de la tête de l'invention ;
- les figures 10A et 10B illustrent un autre procédé de réalisation de la tête.

### Exposé détaillé d'un mode de réalisation

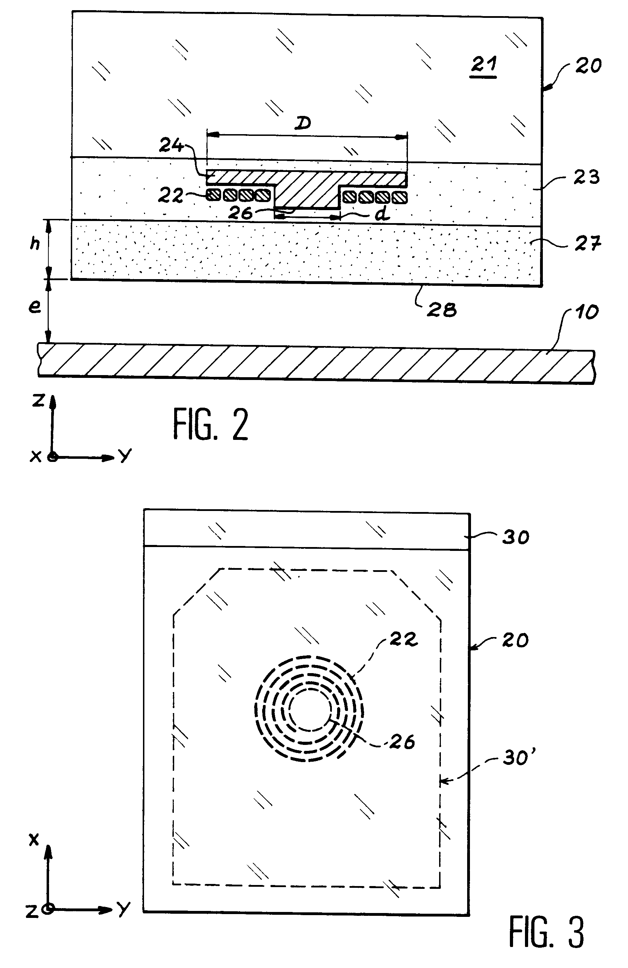

Sur la figure 2, on voit, en coupe, un support d'enregistrement magnéto-optique 10, dont la vitesse de rotation est dirigée perpendiculairement au plan de la figure. Une tête magnétique 20 comprend un substrat en silicium 21, recouvert d'une couche isolante 23, par exemple en oxyde de silicium SiO₂ dans laquelle est enterré un bobinage 22. Dans la variante illustrée, est également enterré dans l'isolant 23, un circuit magnétique 24 en forme par exemple de disque mince, avec un pôle central 26, le bobinage 22 entourant complétement ce pôle. La tête se complète par une couche protectrice 27 par exemple en oxyde de silicium définissant un plan de vol 28.

A titre d'exemple, il peut être indiqué que le diamètre D du circuit magnétique 24 peut aller de 200 µm à 2 mm ; le diamètre d du pôle 26 de 40 à 200 µm ; l'épaisseur h de la couche protectrice 27 peut être de l'ordre de 5 µm ainsi que la distance e entre le plan de vol 28 et le support d'enregistrement 10.

Sur la figure 3, est représentée la tête en vue de dessous, avec son bobinage 22 et le pôle 26. Le patin de vol est supposé présenter, sur tout ou partie de sa superficie, un chanfrein ou un décrochement 30 (ou 30' selon le trait en tireté), selon une technique connue dans les patins de vol pour enregistrement magnétique afin d'améliorer les caractéristiques de vol du patin.

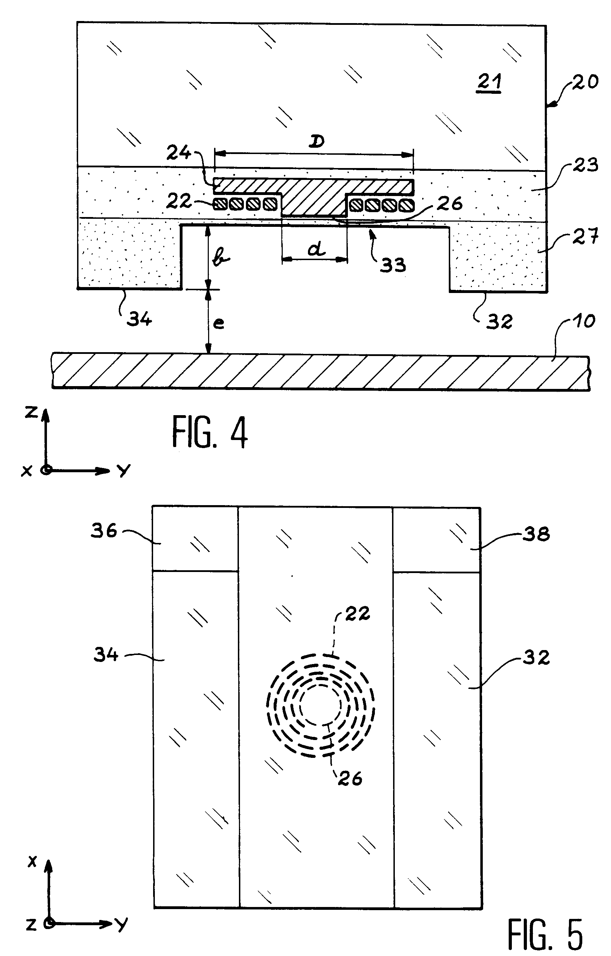

Sur la figure 4 est illustré un autre mode de réalisation avec couche protectrice gravée pour former un patin en forme de catamaran. Deux skis de vol 32 et 34 sont séparés par un retrait d'une hauteur b d'environ 5 µm. Les références communes avec la figure 2 désignent les mêmes éléments.

La figure 5 montre la même tête en vue de dessous. Les skis de vol 32, 34 présentent, à l'avant, un chanfrein ou un décrochement 36, 38. Dans cette variante, un chanfrein et/ou un décrochement peut être également réalisé sur tout ou partie des bords extérieurs des rails.

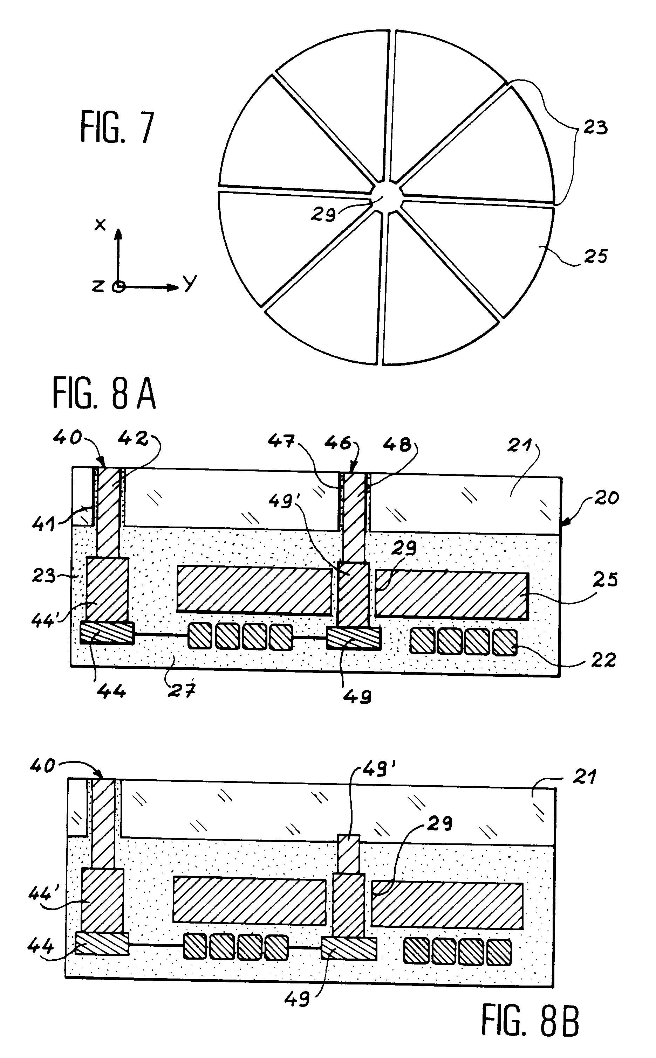

La figure 6 montre une autre variante, avec un circuit magnétique 25 sans pôle central. Ce circuit est alors simplement constitué par une couche magnétique en forme de disque mince.

La figure 7 montre un mode de réalisation de ce disque 25, avec des rainures isolantes radiales 23, pour réduire les courants induits. Le disque possède, par ailleurs, une ouverture centrale 29 pour le passage d'une intraconnexion. Des rainures peuvent également être pratiquées dans un circuit magnétique 24 muni d'un pôle central.

Sur la figure 8A, on voit justement un détail des intraconnexions dans un mode particulier de réalisation. Une intraconnexion 40, située sur le côté de la tête, comprend une ouverture obtenue par exemple par perçage laser dans le silicium, cette ouverture étant entourée d'une couche isolante 41 obtenue, par exemple, par oxydation anodique. L'ouverture est ensuite comblée par un matériau conducteur 42, par exemple une pâte de PbSn. La seconde intraconnexion 46 est placée au centre de la tête et traverse le circuit magnétique 25 par l'ouverture centrale 29. Cette seconde intraconnexion comprend, comme la première, une couche isolante 47 et un coeur conducteur 48.

Les intraconnexions 40 et 46 aboutissent à deux plots de connexion 44 et 49 par l'intermédiaire de conducteurs 44' et 49' traversant la couche isolante 23. Le premier est relié à la spire extérieure du bobinage 22 et le second à la spire intérieure.

Sur la figure 8B, l'intraconnexion 40 a la même structure que sur la figure 8A, mais la seconde intraconnexion et simplifiée : elle comprend encore le plot 49 et le conducteur 49', mais celui-ci est en contact avec le substrat 21, lequel étant semiconducteur, permet d'établir la connexion électrique.

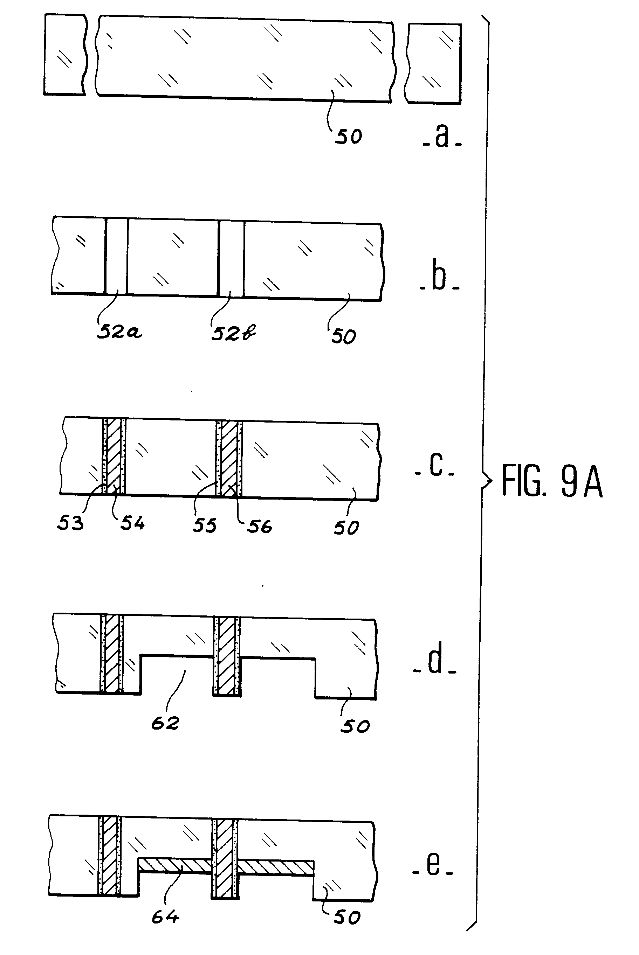

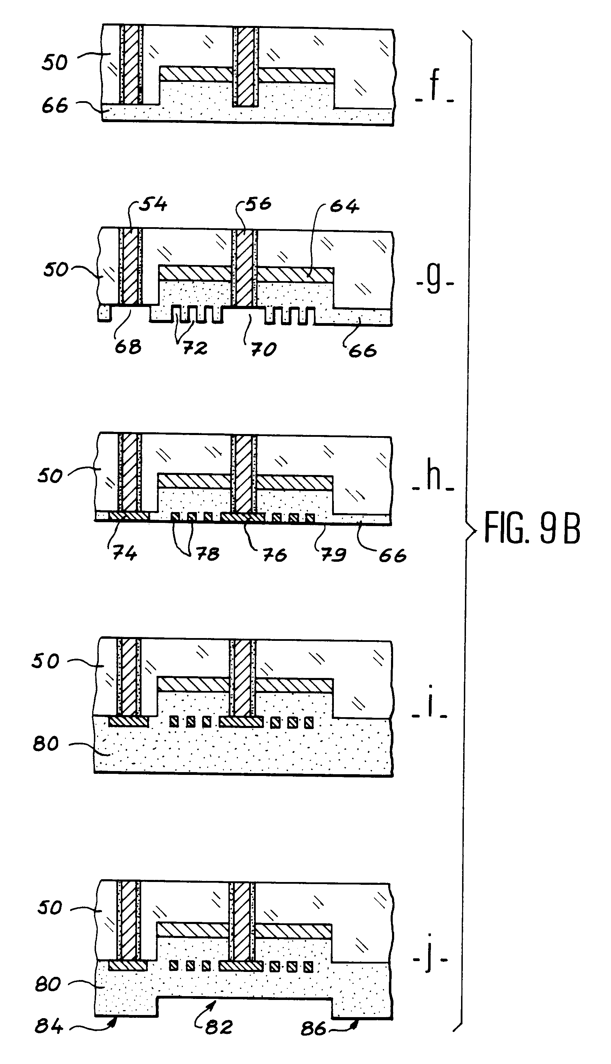

Les figures 9A et 9B illustrent, à titre d'exemple non limitatif, un procédé de réalisation collectif de têtes. Ce procédé comprend déjà les étapes a et e de la figure 9A :
- a) : on part d'une plaquette en silicium 50 de dimension suffisante pour réaliser une pluralité de têtes ;
- b) : on perce dans cette plaquette deux ouvertures 52a, 52b, par exemple au laser, à chaque emplacement des futures intraconnexions d'une tête ;
- c) : on effectue une oxydation thermique pour former les gaines d'oxyde 53 et 55 dans les ouvertures et on remplit ces ouvertures avec une pâte conductrice 54, 56, par exemple en PbSn ;
- d) : on grave le substrat pour former un caisson 62 ;
- e) : on dépose une couche 64 de matériau magnétique (en FeNi par exemple) par électrolyse ou par pulvérisation (dans ce cas l'opération est suivie d'une gravure).

Le procédé se poursuit par les opérations f à j illustrées sur la figure 9B :
- f) : on dépose une couche isolante 66, par exemple en SiO₂ ;
- g) : on grave la couche 66 pour former des ouvertures 68, 70 en regard des intraconnexions 54, 56 et une spirale 72 ;
- h) : on dépose un matériau conducteur au fond des ouvertures 68, 70 et de la spirale gravée, pour former deux plots d'intraconnexions 74, 76 et un bobinage 78, avec les connexions correspondantes (non représentées) entre plots et spires ; le conducteur peut être du cuivre et le dépôt peut s'opérer par électrolyse ou par pulvérisation suivie d'une gravure et/ou d'une planarisation de la surface 79 ;
- i) : on dépose une couche protectrice 80, par exemple en SiO₂, servant de surface porteuse ou de plan de vol ;
- j) : on grave la couche 80 pour définir la surface de vol (ici des skis de vol 84, 86).

Ces opérations peuvent être réalisées collectivement à partir d'une plaquette de silicium. Des plots de connexion peuvent être réalisés et reliés aux intraconnexions sur la face du substrat opposée à celle où les têtes magnétiques ont été réalisées. Il reste ensuite à découper la plaquette selon des lignes de découpe passant entre les différentes têtes pour obtenir les têtes individuelles. On peut éventuellement ensuite usiner les patins de vol pour améliorer leurs performances (usinage de chanfreins, polissage des arêtes, etc...).

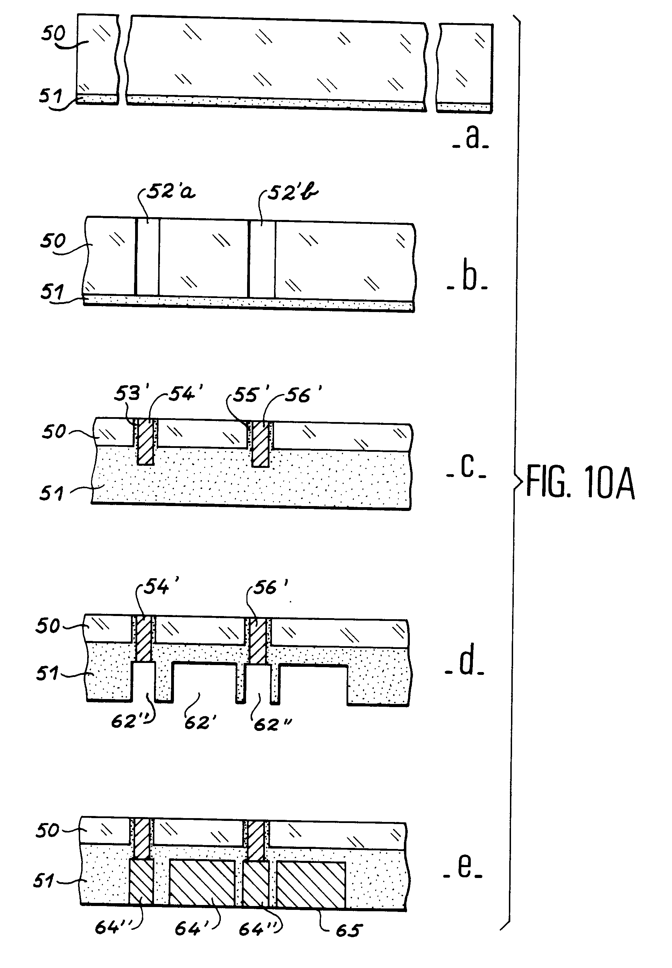

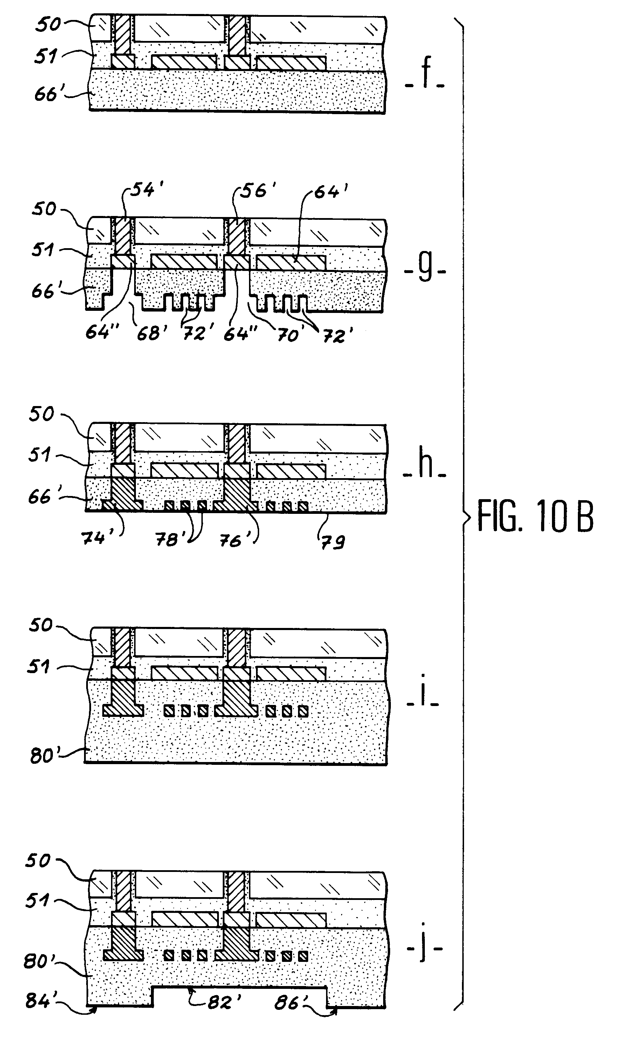

Les figures 10A et 10B illustrent, à titre de deuxième exemple non limitatif, un procédé de réalisation collectif de têtes. Ce procédé comprend déjà les étapes a et e de la figure 10A :
- a) : on part d'une plaquette en silicium 50 de dimension suffisante pour réaliser une pluralité de têtes et on la recouvre d'une couche d'oxyde de silicium 51 ;
- b) : on perce dans cette plaquette deux ouvertures 52a', 52b', non débouchantes, par exemple au laser, à chaque emplacement des futures intraconnexions d'une tête ;
- c) : on effectue une oxydation thermique pour former les gaines d'oxyde 53' et 55' dans les ouvertures ainsi que pour faire remonter l'interface Si/SiO₂ et on remplit ces ouvertures avec une pâte conductrice 54', 56', par exemple en PbSn ;
- d) : on grave l'oxyde superficiel 51 pour former un caisson 62' et deux ouvertures 62'' en regard des intraconnexions 54' et 56'
- e) : on dépose une couche 64' et 64'' de matériau magnétique (en FeNi par exemple) par électrolyse ou par pulvérisation (dans ce cas l'opération est suivie d'une gravure), puis on planarise la surface 65.

Le procédé se poursuit par les opérations f à j illustrées sur la figure 10B :
- f) : on dépose une couche isolante 66', par exemple en SiO₂ ;
- g) : on grave la couche 66' pour former des ouvertures 68', 70' en regard des dépôts 64'' et une spirale 72' ;
- h) : on dépose un matériau conducteur au fond des ouvertures 68', 70' et de la spirale gravée, pour former deux plots d'intraconnexions 74', 76' et un bobinage 78', avec les connexions correspondantes (non représentées) entre plots et spires ; le conducteur peut être du cuivre et le dépôt peut s'opérer par électrolyse ou par pulvérisation suivie d'une gravure et/ou d'une planarisation de la surface 79' ;
- i) : on dépose une couche protectrice 80', par exemple en SiO₂, servant de surface porteuse ou de plan de vol ;
- j) : on grave la couche 80' pour définir la surface de vol (ici des skis de vol 84', 86').

Comme pour le mode de réalisation des figures 9A et 9B, ces opérations peuvent être réalisées collectivement à partir d'une plaquette de silicium. Des plots de connexion peuvent être réalisés et reliés aux intraconnexions sur la face du substrat opposée à celle où les têtes magnétiques ont été réalisées. Il reste ensuite à découper la plaquette selon des lignes de découpe passant entre les différentes têtes pour obtenir les têtes individuelles. On peut éventuellement ensuite usiner les patins de vol pour améliorer leurs performances (usinage de chanfreins, polissage des arêtes, etc...).

Les têtes magnétiques qui viennent d'être décrites peuvent être utilisées comme composants dans un système lecteur/enregistreur magnéto-optique avec réécriture directe fonctionnant par modulation du champ magnétique, éventuellement couplée à une modulation du laser. La modulation du champ magnétique s'obtient par modulation du courant injecté dans la tête magnétique.

Les principales applications d'un tel système se situent dans les domaines suivants :
- réseaux informatiques, stations de travail, micro-ordinateurs :
   · pour le stockage des données et logiciels des utilisateurs sur disques amovibles,
   · pour l'utilisation de logiciels commercialisés sur disques amovibles,
   · pour l'archivage des données sur systèmes multidisques éventuellement pourvus de changeurs de disques,
- audio, vidéo, multimédia grand public :
   · enregistreur audio type "Mini-Disc" (SONY) de performances accrues,
   · enregistreur vidéo (remplaçant les magnétoscopes),
   · enregistreur photographique : les photographies pourraient être faites et visualisées directement sur l'appareil, puis effacées si elles ne conviennent pas, libérant ainsi la place pour de nouvelles photographies réussies,
   · enregistreur multimédia : images, sons, logiciels de jeux ou d'applications grand public (domotiques ou linguistiques par exemple) et leurs données informatiques.

## Revendications

1. Tête magnétique d'écriture pour enregistrement magnétooptique, comprenant un substrat et un bobinage conducteur plan, caractérisé par le fait que le substrat (21) est en silicium et que le bobinage (22) est enterré dans une couche isolante (23) déposée sur le substrat (21), le bobinage (22) étant en retrait par rapport au plan de vol (28) de la tête.

2. Tête magnétique selon la revendication 1, caractérisée par le fait qu'il comprend en outre un circuit (24) en matériau magnétique situé à proximité et à l'arrière du bobinage (22).

3. Tête magnétique selon la revendication 2, caractérisée par le fait que le circuit (24) en matériau magnétique comprend des rainures isolantes radiales (23).

4. Tête magnétique selon la revendication 2, caractérisée par le fait que le circuit en matériau magnétique comprend en son centre un pôle (26), le bobinage (22) entourant ce pôle.

5. Tête magnétique selon la revendication 1, caractérisé par le fait que le bobinage conducteur (22) a son centre dans le plan médian du patin de vol.

6. Tête magnétique selon la revendication 1, caractérisée par le fait que le patin présente la forme d'un catamaran, le plan de vol comprenant deux skis de vol (32, 34) séparés par une zone en retrait.

7. Tête magnétique selon la revendication 6, caractérisée par le fait que le bobinage (22) est disposé sous la zone en retrait, à égale distance des deux skis de vol (32, 34).

8. Tête magnétique selon la revendication 1, caractérisée par le fait que le patin de vol en silicium avec son bobinage (22) est recouvert d'une couche protectrice (27) non magnétique, cette couche définissant le plan de vol (28).

9. Tête magnétique selon la revendication 8, caractérisée en ce que la couche protectrice est gravée sur tout ou partie de sa périphérie.

10. Tête magnétique selon la revendication 6, caractérisée par le fait qu'elle comprend une couche protectrice (80, 80') non magnétique dans laquelle sont réalisés deux skis de vol (84, 86)-(84', 86') séparés par une zone en retrait (82, 82').

11. Tête magnétique selon la revendication 1, caractérisée par le fait qu'elle comprend en outre deux intraconnexions (40, 46) reliant la face du patin opposée au plan de vol (28) au plan du bobinage conducteur (22), deux plots de connexion (44, 49) situés dans le plan du bobinage et reliés chacun à une intraconnexion (40, 46) et à l'une des extrémités du bobinage (22).

12. Tête magnétique selon la revendication 11, caractérisée par le fait que l'une des intraconnexions (46) aboutit au centre du bobinage, l'un des plots de connexion (49) étant situé en ce centre.

13. Tête magnétique selon les revendications 2 et 12, caractérisée par le fait que le circuit en matériau magnétique (25) est percé en son centre d'une ouverture (29), l'intraconnexion (46) aboutissant au centre du bobinage passant à travers cette ouverture (29).

14. Tête magnétique selon la revendication 2, caractérisée par le fait qu'elle comprend une couche isolante supplémentaire (51) déposée sur le substrat en silicium (21), le circuit magnétique (24) étant déposé sur cette couche isolante (51).

15. Tête magnétique selon la revendication 1, caractérisée par le fait qu'elle comprend en outre une première intraconnexion (40) reliant la face du patin opposée au plan de vol au plan du bobinage conducteur, un premier plot de connexion (44) situé dans le plan du bobinage et relié à la première intraconnexion et à une première extrémité du bobinage (22) et un second plot de connexion (49) relié au substrat en silicium (21) et à une seconde extrémité du bobinage (22).

16. Tête magnétique selon la revendication 15, caractérisée par le fait que le second plot de connexion (49) est disposé au centre du bobinage (22), le circuit magnétique (25) est percé en son centre d'une ouverture (29), le second plot connexion (49) étant relié au substrat de silicium (21) à travers cette ouverture (29).

17. Tête magnétique selon l'une quelconque des revendications 11 et 15, caractérisée par le fait que les plots de connexion (44, 49) sont reliés aux intraconnexions (40, 46) par des conducteurs (44', 49') réalisés en ledit matériau magnétique.
